# EUROPEAN PATENT APPLICATION

(11) **EP 4 502 210 A1**
(43) Date of publication of application: **05.02.2025**
(21) Application number: 22940833.1
(22) Date of filing: 09.12.2022
(51) Int. Cl.: C22C 38/00, B21B 1/22, B21C 37/08, B22D 11/00, B23K 13/00, C21D 8/02, C21D 9/08, C21D 9/46, C21D 9/50, C22C 38/14, C22C 38/58

(54) **HOT-ROLLED STEEL SHEET AND METHOD FOR MANUFACTURING SAME, AND ELECTRIC RESISTANCE WELDED STEEL PIPE AND METHOD FOR MANUFACTURING SAME**

(30) Priority: 06.05.2022 JP 2022076721
(71) Applicant: JFE Steel Corporation, Tokyo 100-0011 (JP)
(72) Inventor: MATSUMOTO, Akihide, Tokyo 100-0011 (JP); IDE, Shinsuke, Tokyo 100-0011 (JP); MATSUMOTO, Atsushi, Tokyo 100-0011 (JP); NAKAZAWA, Ryo, Tokyo 100-0011 (JP)
(74) Representative: Haseltine Lake Kempner LLP
(86) International application number: PCT/JP2022/045573
(87) International publication number: WO 2023/214472

(57) **Abstract**

It is provided a hot-rolled steel sheet as the material of an electric resistance welded steel pipe or tube with high strength and excellent workability and toughness, which is suitable for a machine structural steel pipe or tube used as a part of an automobile, construction machinery, or industrial machinery. The hot-rolled steel sheet has a predetermined chemical composition and has a steel microstructure at the sheet thickness center with a volume fraction of bainite of 90 % or more and the balance containing one or more of ferrite, pearlite, martensite, and austenite. The above steel microstructure at the sheet thickness center further has an average grain size of 10.0 µm or less, a volume fraction of crystal grains with a grain size of 40.0 µm or more, and a number density of Ti-based inclusions with a long diameter length of 5.0 µm or more of 20 pieces/mm² or less.

## Description

### TECHNICAL FIELD

This disclosure relates to an electric resistance welded steel pipe or tube suitable for a machine structural steel pipe or tube used as a part of an automobile, construction machinery, or industrial machinery, and a hot-rolled steel sheet used as material thereof, and methods of producing the same.

### BACKGROUND

In recent years, there has been a demand for higher-strength components in automobiles, construction machinery, and industrial machinery to improve fuel efficiency and downsize equipment.

High workability is also required because machine structural steel pipes or tubes used for such applications are subjected to processing such as bending forming, hydraulic bulge forming, and pipe or tube-end flaring, depending on the application.

High low-temperature toughness is further required because the aforementioned automobiles, construction machinery, and industrial machinery are sometimes used in cold regions.

However, as the member is strengthened, the workability and toughness of its base metal portion and electric resistance weld portion are reduced, and the member cannot be used for the intended application.

In addition, because the workability and toughness of an electric resistance welded steel pipe or tube are reduced by work hardening during pipe or tube forming, a hot-rolled steel sheet used as the material is required to have properties that consider the allowance for the reduction in workability and toughness during pipe or tube forming.

In order to solve the above problem, for example, Patent Literature (PTL) 1 proposes a steel sheet containing 90 area% or more of bainite, with an average equivalent circular diameter d of 4 µm or less in the region surrounded by large-angle grain boundaries with an orientation difference of 15° or more, and further containing 3 area% to 10 area% of martensite austenite constituent with an average equivalent circular diameter of 0.5 µm to 3 µm and a Vickers hardness Hv of 700 or more.

Moreover, PTL 2 proposes a hot-rolled steel sheet in which the total area ratio of the martensite phase and the lower bainitic phase is 85 % or more, the average grain size of crystal grains is 20 µm or less, the area percentage of crystal grains whose aspect ratio is 0.30 or less is 50 % or less, and the average value and the maximum value of the X-ray random strength ratios of orientation groups of {100} <011> to {211} <011> at the mid-thickness position are 6.0 or less and 8.0 or less, respectively.

Furthermore, PTL 3 proposes an as-rolled electric resistance welded steel pipe or tube for torsion beam, in which the area ratio of bainite is 80 % or more, the average grain size of packet grains of the bainite is 10 µm or less, the average aspect ratio of the packet grains is 2.0 or less, and the tensile strength in the pipe or tube axial direction is 750 MPa to 1000 MPa.

### CITATION LIST

### Patent Literature

PTL 1: JP2013-057105A
PTL 2: JP2017-057472A
PTL 3: WO2019/220577A1

### SUMMARY

### (Technical Problem)

The steel sheets and electric resistance welded steel pipe or tube described in PTLs 1-3 have improved strength, toughness, workability, fatigue resistance, etc. by controlling the average grain sizes of bainite and martensite, which are the main microstructures. However, no consideration was made in terms of coarse grain ratio, inclusions, and the workability of the electric resistance weld portion. There was room for further improvement in toughness and workability.

This disclosure has been made in view of the above situations. It could be helpful to provide an electric resistance welded steel pipe or tube with high strength and excellent workability and toughness, which is suitable for a machine structural steel pipe or tube used as a part of an automobile, construction machinery, or industrial machinery, and a hot-rolled steel sheet used as material thereof, and methods of producing the same.

The term "high strength" as used in this disclosure refers to, in the hot-rolled steel sheet, a yield stress in the rolling direction of 650 MPa or more and a tensile strength of 750 MPa or more. In the hot-rolled steel sheet, it is preferred that the yield stress is 700 MPa or more and the tensile strength is 800 MPa or more.

On the other hand, the term "high strength" as used in this disclosure refers to, in the electric resistance welded steel pipe or tube, a yield stress in the pipe or tube axial direction of 650 MPa or more, a tensile strength of 750 MPa or more, and a Vickers hardness at the wall thickness center of the electric resistance weld portion of 200 HV or more. In the electric resistance welded steel pipe or tube, it is preferred that the yield stress is 700 MPa or more, the tensile strength is 800 MPa or more, and the Vickers hardness is 220 HV or more.

The term "excellent workability" as used in this disclosure refers to, in the hot-rolled steel sheet, a yield ratio (= yield stress/tensile strength × 100) in the rolling direction of 90.0 % or less and a total elongation in the rolling direction of 15 % or more. In the hot-rolled steel sheet, the yield ratio in the rolling direction is preferably 88.0 % or less. In the hot-rolled steel sheet, the total elongation in the rolling direction is preferably 18 % or more.

On the other hand, the term "excellent workability" as used in this disclosure refers to, in the electric resistance welded steel pipe or tube, a yield ratio (= yield stress/tensile strength × 100) in the pipe or tube axial direction of 96.0 % or less, a total elongation in the pipe or tube axial direction of 15 % or more, and a flattening value of the electric resistance weld portion of 0.80 or less. In the electric resistance welded steel pipe or tube, the yield ratio in the pipe or tube axial direction is preferably 94.0 % or less. In the electric resistance welded steel pipe or tube, the total elongation in the pipe or tube axial direction is preferably 17 % or more, and the flattening value of the electric resistance weld portion is preferably 0.70 or less.

The term "excellent toughness" as used in this disclosure refers to, in the hot-rolled steel sheet, a Charpy impact value at -60 °C of 100 J/cm² or more. In the hot-rolled steel sheet, the Charpy impact value at -60 °C is preferably 140 J/cm² or more.

On the other hand, the term "excellent toughness" as used in this disclosure refers to, in the electric resistance welded steel pipe or tube, a Charpy impact value at -20 °C of 50 J/cm² or more. In the electric resistance welded steel pipe or tube, the Charpy impact value at -20 °C is preferably 60 J/cm² or more.

### (Solution to Problem)

The inventors have intensively studied the aforementioned problem. As a result, the inventors found that, in bainite-dominant steel, the toughness and workability are reduced when some crystal grains are coarse.

The inventors also found that the presence of a large number of coarse Ti-based inclusions reduces the toughness.

When the microstructure is coarse on average, the toughness of the steel sheet is reduced because the percentage of large-angle grain boundaries that act as barriers to brittle fracture is reduced. Even if the average grain size of the steel microstructure is small, when a certain percentage of coarse grains are present, the toughness of the steel sheet is still reduced because coarse grains become the initiation points of brittle fracture.

In other words, coarse grains have lower strengths than those of their surrounding grains, and strain is concentrated at the coarse grains. Therefore, when a certain percentage or more of coarse grains are present in the steel microstructure, such steel is more prone to premature fracture, reducing total elongation and reducing workability.

Therefore, toughness and workability can be improved by suppressing the formation of bainite that exists as coarse grains.

The polygonal shape of Ti-based inclusions tends to cause stress concentrations near the corners, and the positions at which such stress concentrations occur are likely to become the initiation points of brittle fracture. Therefore, the presence of a large number of coarse Ti-based inclusions reduces toughness.

Therefore, toughness can be improved by suppressing the formation of such Ti-based inclusions.

This disclosure is accomplished based on the aforementioned discoveries and further studies. We provide:
1. A hot-rolled steel sheet comprising a chemical composition containing (consisting of), in mass%:
   C: 0.020 % or more and 0.200 % or less;
   Si: 0.02 % or more and 1.00 % or less;
   Mn: 0.10 % or more and 2.50 % or less;
   P: 0.050 % or less;
   S: 0.0200 % or less;
   Al: 0.005 % or more and 0.100 % or less;
   N: 0.0100 % or less; and
   Ti: 0.030 % or more and 0.200 % or less,
   with the balance being Fe and inevitable impurities,
   the hot-rolled steel sheet having a steel microstructure at the sheet thickness center with a volume fraction of bainite of 90 % or more and the balance containing one or more of ferrite, pearlite, martensite, and austenite, wherein
   the steel microstructure at the sheet thickness center further has an average grain size of 10.0 µm or less, a volume fraction of crystal grains with a grain size of 40.0 µm or more of 40 % or less, and a number density of Ti-based inclusions with a long diameter length of 5.0 µm or more of 20 pieces/mm² or less.
2. The hot-rolled steel sheet according to 1. above, wherein the component composition further contains one or more of, in mass%:
   Cu: 0.50 % or less;
   Ni: 0.50 % or less;
   Cr: 0.50 % or less;
   Mo: 0.50 % or less;
   Nb: 0.050 % or less;
   V: 0.050 % or less;
   Ca: 0.0050 % or less; and
   B: 0.0050 % or less.
3. A method of producing the hot-rolled steel sheet according to 1. or 2. above, the method comprising:
   a casting step of casting molten steel at an average cooling rate of 0.30 °C/s or more from the solidification point of the molten steel to 1200 °C to form a steel material;
   a hot rolling step of heating the steel material to a heating temperature in a range of 1150 °C or more and 1300 °C or less and then hot rolling the heated steel material with a rough rolling finish temperature of 950 °C or more and 1180 °C or less, a rolling finish temperature of 850 °C or more and 1000 °C or less, and a total rolling reduction in finish rolling of 50 % or more and 80 % or less to form a hot-rolled sheet;
   a cooling step of, after the hot rolling step, cooling the hot-rolled sheet at an average cooling rate in the mid-thickness of 10 °C/s or more and 60 °C/s or less and a cooling stop temperature in the mid-thickness of 400 °C or more and 580 °C or less; and
   a coiling step of, after the cooling step, coiling the cooled hot-rolled sheet at a temperature of 400 °C or more and 580 °C or less.
4. An electric resistance welded steel pipe or tube comprising a base metal portion, a weld portion, and a heat-affected zone, wherein
   the base metal portion has a chemical composition containing (consisting of), in mass:
      C: 0.020 % or more and 0.200 % or less;
      Si: 0.02 % or more and 1.00 % or less;
      Mn: 0.10 % or more and 2.50 % or less;
      P: 0.050 % or less;
      S: 0.0200 % or less;
      Al: 0.005 % or more and 0.100 % or less;
      N: 0.0100 % or less; and
      Ti: 0.030 % or more and 0.200 % or less,
         with the balance being Fe and inevitable impurities,
   the base metal portion has a steel microstructure at the wall thickness center with a volume fraction of bainite of 90 % or more and the balance containing one or more of ferrite, pearlite, martensite, and austenite,
   the steel microstructure at the wall thickness center of the base metal portion further has an average grain size of 10.0 µm or less, a volume fraction of crystal grains with a grain size of 40.0 µm or more of 40 % or less, and a number density of Ti-based inclusions with a long diameter length of 5.0 µm or more of 20 pieces/mm² or less,
   the weld portion has a steel microstructure at the wall thickness center with a volume fraction of ferrite of 10 % or more, a total volume fraction of ferrite and bainite of 60 % or more and 98 % or less, and the balance containing one or more of pearlite, martensite, and austenite, and
   the steel microstructure at the wall thickness center of the weld portion further has an average grain size of 15.0 µm or less.
5. The electric resistance welded steel pipe or tube according to 4. above, wherein the chemical composition of the base metal portion further contains one or more of, in mass%:
   Cu: 0.50 % or less;
   Ni: 0.50 % or less;
   Cr: 0.50 % or less;
   Mo: 0.50 % or less;
   Nb: 0.050 % or less;
   V: 0.050 % or less;
   Ca: 0.0050 % or less; and
   B: 0.0050 % or less.
6. A method of producing the electric resistance welded steel pipe or tube according to 4. or 5. above, the method comprising:
   a pipe or tube forming step of forming a hot-rolled steel sheet into a cylindrical shape by cold roll forming, butt-joining circumferential ends of the cylindrical shape, and then subjecting the circumferential ends to electric resistance welding;
   a weld portion heat treatment step of, after the pipe or tube forming step, heating the portion subjected to the electric resistance welding to a temperature of 850 °C or more and 1050 °C or less, air cooling the portion for 5 seconds or more and 50 seconds or less, and then water cooling the portion to a temperature of 200 °C or less; and
   a sizing step of, after the weld portion heat treatment step, adjusting the pipe or tube outer diameter by sizing rollers.

### (Advantageous Effect)

According to this disclosure, it can be provided an electric resistance welded steel pipe or tube with high strength and excellent workability and toughness, which is suitable for a machine structural steel pipe or tube used as a part of an automobile, construction machinery, or industrial machinery, and a hot-rolled steel sheet used as material thereof, and methods of producing the same.

### BRIEF DESCRIPTION OF THE DRAWINGS

In the accompanying drawings:

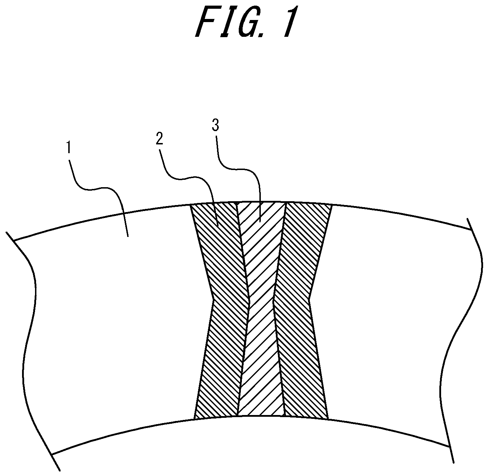

FIG. 1 is a schematic diagram of a cross section in the pipe or tube circumferential direction (vertical cross section in the pipe or tube axial direction) of the electric resistance weld portion of an electric resistance welded steel pipe or tube.

### DETAILED DESCRIPTION

The following describes a hot-rolled steel sheet of this disclosure and an electric resistance welded steel pipe or tube using the hot-rolled steel sheet as a base metal portion, as well as their production methods. However, this disclosure is not limited to the following embodiments.

In this disclosure, when the center in the pipe or tube circumferential direction at the point subjected to electric resistance welding (also referred to as an electric resistance weld portion in this disclosure) is 0° at the cross section perpendicular to the pipe or tube axis of the electric resistance welded steel pipe or tube, the chemical composition and steel microstructure of the base metal portion 90° away from such point in the pipe or tube circumferential direction are defined as the chemical composition and the steel microstructure at the wall thickness center, of the base metal portion of the electric resistance welded steel pipe or tube in this disclosure.

The position 90° away from the electric resistance weld portion is specified. However, for example, the same chemical composition and steel microstructure are present at the position 180° away from the electric resistance weld portion.

First, the reason for limiting the steel microstructures of the hot-rolled steel sheet and the base metal portion of the electric resistance welded steel pipe or tube in this disclosure is explained.

In the steel microstructures of the hot-rolled steel sheet and the electric resistance welded steel pipe or tube in this disclosure, the steel microstructure at the sheet thickness center of the hot-rolled steel sheet and at the wall thickness center of the base metal portion of the electric resistance welded steel pipe or tube has a volume fraction of bainite of 90 % or more and the balance containing one or more of ferrite, pearlite, martensite, and austenite. this steel microstructure also has an average grain size of 10.0 µm or less and a volume fraction of crystal grains with a grain size of 40.0 µm or more of 40 % or less. Furthermore, this steel microstructure has a number density of Ti-based inclusions with a long diameter length of 5.0 µm or more of 20 pieces/mm² or less.

In this disclosure, for the above steel microstructure, it is important to define at least the sheet thickness center of the hot-rolled steel sheet and the wall thickness center of the base metal portion of the electric resistance welded steel pipe or tube. These centers are final solidification positions in a casting step, where the cooling rate is the lowest and the inclusions are the coarsest. At these centers, also in a cooling step during hot rolling, the cooling rate is the lowest and the inclusions are the coarsest.

Here, ferrite is a soft microstructure. Bainite is a microstructure harder than ferrite and softer than pearlite, martensite, and austenite.

### [Volume fraction of bainite]

When the volume fraction of bainite at the sheet thickness center of the hot-rolled steel sheet and at the wall thickness center of the base metal portion of the electric resistance welded steel pipe or tube is less than 90 %, the desired yield stress or tensile strength cannot be obtained, or the desired toughness cannot be obtained. Therefore, the volume fraction of bainite at the sheet thickness center of the hot-rolled steel sheet and at the wall thickness center of the base metal portion of the electric resistance welded steel pipe or tube is 90 % or more. The volume fraction of bainite at the sheet thickness center of the hot-rolled steel sheet and at the wall thickness center of the base metal portion of the electric resistance welded steel pipe or tube is preferably 93 % or more, and further preferably 96 % or more.

No particular upper limit is placed on the volume fraction of bainite at the sheet thickness center of the hot-rolled steel sheet and at the wall thickness center of the base metal portion of the electric resistance welded steel pipe or tube. However, from the viewpoint of ductility, the upper limit is preferably 99 % or less.

In this disclosure, the value of the volume fraction of the microstructure, such as bainite, is a value in the whole steel microstructure in the same field of view at the target location.

### [Balance containing one or more of austenite, ferrite, pearlite, and martensite]

The balance at the sheet thickness center of the hot-rolled steel sheet and at the wall thickness center of the base metal portion of the electric resistance welded steel pipe or tube contains one or more of austenite, ferrite, pearlite, and martensite. Each of these microstructures has a hardness difference from bainite, and stress is concentrated at the interface with bainite. When the total volume fraction of these respective microstructures exceeds 10 %, the area of the interface with bainite increases, and fracture is more likely to occur due to stress concentration, resulting in reduced toughness. Therefore, the total volume fraction of these respective microstructures is 10 % or less, preferably 7 % or less, and more preferably 4 % or less. It is difficult to completely suppress the formation of these microstructures in the cooling step during hot rolling. Thus, a lower limit of about 1 % of their total volume fraction is acceptable.

Various microstructures, except austenite, of the above steel microstructure have austenite grain boundaries or deformation zones within austenite grains as nucleation sites. That is, by increasing the amount of pressure drop during hot rolling at low temperatures, where austenite recrystallization is unlikely to occur, a large number of dislocations can be introduced into the austenite to refine the austenite and introduce a large number of deformation zones into the grains. This increases the area of nucleation sites and the nucleation frequency in this disclosure, which can refine the steel microstructure.

In this disclosure, the steel microstructure can be observed by the methods described below or in the examples described below.

That is, a test piece for microstructure observation is first taken so that the observation plane is a cross section parallel to both the rolling direction and the sheet thickness direction and a position at the sheet thickness center of the hot-rolled steel sheet, and a cross section parallel to both the pipe or tube axial direction and the wall thickness direction and a position at the wall thickness center of the electric resistance welded steel pipe or tube. After this observation plane is polished, the test piece is accomplished by nital etching.

The microstructure observation is performed using an optical microscopy (magnification: 1000×) or a scanning electron microscope (SEM, magnification: 1000×) to observe and image the microstructure at the sheet thickness (or wall thickness) center.

Each area ratio of bainite and the balance (ferrite, pearlite, martensite, and austenite) are then determined from the obtained optical microscopy and SEM images. The area ratio of each microstructure is the average of the values obtained at each field of view after observation in five or more fields of view at the above sheet thickness (or wall thickness) center.

In this disclosure, the area ratio obtained by microstructure observation is used as the volume fracture of each microstructure.

In this disclosure, the sheet thickness (or wall thickness) center is defined as the center position in the sheet thickness direction (1/2 position of the sheet thickness) or the center position in the wall thickness direction (1/2 position of the wall thickness). However, so long as the aforementioned steel microstructure is present within the range of ±0.20 mm in the sheet thickness (or wall thickness) direction with this sheet thickness (or wall thickness) center as the center, the effect of this disclosure can be similarly obtained. Therefore, in this disclosure, "steel microstructure at the sheet thickness (or wall thickness) center" means a steel microstructure with a given area (preferably 0.10 mm² or more) that is present at any position in the range of ±0.20 mm in the sheet thickness (or wall thickness) direction with the sheet thickness (or wall thickness) center as the center.

Ferrite is a product of diffusional transformation, which presents a nearly recovered microstructure with a low dislocation density. Ferrite includes polygonal ferrites and pseudo-polygonal ferrites.

Bainite is a lath-like ferrite-cementite multi-phase structure with a high dislocation density.

Perlite is a co-deposited microstructure (ferrite + cementite) of iron and iron carbides, which presents a lamellar microstructure of alternating linear ferrite and cementite.

Martensite is a lath-like low-temperature transformed microstructure with an extremely high dislocation density. In the SEM image, martensite exhibits brighter contrast compared with ferrite and bainite.

The above optical microscopy and SEM images are difficult to distinguish between martensite and austenite. Therefore, the total area ratio of the microstructure observed as martensite or austenite from the SEM image obtained is calculated. The volume fraction of martensite is a value obtained by subtracting the volume fraction of austenite, which is measured by the following method, from the total value.

That is, using the fact that austenite is the fcc phase, the volume fraction of austenite is determined by X-ray diffraction. The volume fraction of austenite can be determined from the integrated intensity of the (200), (220), and (311) planes of fcc iron and the (200) and (211) planes of bcc iron obtained by this X-ray diffraction.

The above steel microstructure at the sheet thickness center of the hot-rolled steel sheet and at the wall thickness center of the base metal portion of the electric resistance welded steel pipe or tube further has an average grain size of 10.0 µm or less and a volume fraction of crystal grains with a grain size of 40.0 µm or more of 40 % or less. The steel microstructure also has a number density of Ti-based inclusions with a long diameter length of 5.0 µm or more of 20 pieces/mm² or less.

In this disclosure, the term "average grain size" is defined as the average value of the equivalent circular diameters of crystal grains when the region surrounded by the boundary with an orientation difference of 15° or more between adjacent crystals is defined as the crystal grains.

The term "equivalent circular diameter (crystal grain size)" is defined as the diameter of a circle whose area is equal to that of the target crystal grain.

The term "Ti-based inclusions" is defined as inclusions with a percentage of Ti of 50 mass% or more. However, elements with atomic numbers 1 to 10 (H to Ne in the periodic table) have large measurement errors and may be contaminants adhered to the surface. Thus, this percentage of Ti is the percentage in elements with atomic numbers 11 and higher (Na and higher in the periodic table).

### [Average grain size]

When the average grain size of the crystal grains at the sheet thickness center of the hot-rolled steel sheet and at the wall thickness center of the base metal portion of the electric resistance welded steel pipe or tube exceeds 10.0 µm, the steel microstructure is not sufficiently fine. Thus, the yield stress or tensile strength intended in this disclosure cannot be obtained. The toughness is also reduced. Therefore, the average grain size of the crystal grains at the sheet thickness center of the hot-rolled steel sheet and at the wall thickness center of the base metal portion of the electric resistance welded steel pipe or tube is 10.0 µm or less. This average grain size of the crystal grains is preferably 8.0 µm or less. If this average grain size is too small, the yield ratio is likely to increase. Thus, the average grain size is preferably 3.0 µm or more.

### [Volume fracture of crystal grains with grain size of 40.0 µm or more]

When the volume fraction of crystal grains with a grain size of 40.0 µm or more exceeds 40 % at the sheet thickness center of hot-rolled steel sheet and at the wall thickness center of the base metal portion of the electric resistance welded steel pipe or tube, toughness and/or workability is reduced due to the high percentage of coarse crystal grains. Therefore, the volume fraction of crystal grains with a grain size of 40.0 µm or more at the sheet thickness center of the hot-rolled steel sheet and at the wall thickness center of the base metal portion of the electric resistance welded steel pipe or tubes is 40 % or less. The volume fraction of crystal grains with a grain size of 40.0 µm or more at the sheet thickness center of the hot-rolled steel sheet and at the wall thickness center of the base metal portion of the electric resistance welded steel pipe or tubes is preferably 30 % or less.

### [Number density of Ti-based inclusions with long diameter length of 5.0 µm or more]

When the number density of Ti-based inclusions with a long diameter length of 5.0 µm or more at the sheet thickness center of the hot-rolled steel sheet and at the wall thickness center of the base metal portion of the electric resistance welded steel pipe or tube exceeds 20 pieces/mm², toughness is reduced due to many coarse polygonal-shaped inclusions. Therefore, the number density of Ti-based inclusions with a long diameter length of 5.0 µm or more at the sheet thickness center of the hot-rolled steel sheet and at the wall thickness center of the base metal portion of the electric resistance welded steel pipe or tube is 20 pieces/mm² or less. The number density of Ti-based inclusions with a long diameter length of 5.0 µm or more at the sheet thickness center of the hot-rolled steel sheet and at the wall thickness center of the base metal portion of the electric resistance welded steel pipe or tube is preferably 10 pieces/mm² or less.

As described in detail in the examples below, the following methods can be used to measure the average grain size of the steel microstructure, the volume fraction of crystal grains with a grain size of 40.0 µm or more, and the number density of Ti-based inclusions with a long diameter length of 5.0 µm or more.

The average grain size is determined as the arithmetic average of crystal grain sizes, by mirror-polishing each of the cross section parallel to both the rolling direction and the sheet thickness direction of the hot-rolled steel sheet and the cross section parallel to both the pipe or tube axial direction and the wall thickness direction of the base metal portion of the electric resistance welded steel pipe or tube and then calculating a histogram of the crystal grain size distribution (graph with horizontal axis: crystal grain size and vertical axis: present percentage at each crystal grain size) at the sheet thickness center of the hot-rolled steel sheet and at the wall thickness center of the base metal portion of the electric resistance welded steel pipe or tube using the SEM/EBSD method.

The measurement conditions are as follows: accelerating voltage: 15 kV; measurement region: 300 µm × 300 µm; and measurement step size (measurement resolution): 0.5 µm, and measurement values in five or more fields of view are averaged. In the analysis of crystal grain size, crystal grains with a crystal grain size of less than 2.0 µm are excluded from the analysis target as measurement noise.

The volume fraction of crystal grains with a grain size of 40.0 µm or more can be determined by finding the sum of area ratios of crystal grains with a grain size of 40.0 µm or more from the above histogram of crystal grain size distribution and considering this sum of area ratios as the above volume fraction.

The number density of Ti-based inclusions with a long diameter length of 5.0 µm or more is determined by mirror polishing each of the cross section parallel to both the rolling direction and the sheet thickness direction of the hot-rolled steel sheet and the cross section parallel to both the pipe or tube axial direction and the wall thickness direction of the base metal portion of the electric resistance welded steel pipe or tube and then combining the long diameter length measurement of inclusions using the SEM and the element analysis by the SEM/EDS method in the same field of view.

The above number density is determined by averaging the measured values in five or more fields of view over a measurement area of 4 mm × 10 mm, with the measurement positions being the sheet thickness center of the hot-rolled steel sheet and the wall thickness center of the base metal portion of the electric resistance welded steel pipe or tube.

The steel microstructure at the wall thickness center of the electric resistance weld portion of the electric resistance welded steel pipe or tube in this disclosure has a volume fraction of ferrite of 10 % or more, a total volume fraction of ferrite and bainite of 60 % or more and 98 % or less, the balance containing one or more of pearlite, martensite, and austenite, and further an average grain size of 15.0 µm or less.

### [Volume fraction of ferrite]

When the volume fraction of ferrite at the wall thickness center of the electric resistance weld portion of the electric resistance welded steel pipe or tube is less than 10 %, the ductility of the electric resistance weld portion is reduced, and the flattening value of the electric resistance weld portion intended in this disclosure cannot be obtained. Therefore, the volume fraction of ferrite at the wall thickness center of the electric resistance weld portion of the electric resistance welded steel pipe or tube is 10 % or more. The volume fraction of ferrite at the wall thickness center of the electric resistance weld portion of the electric resistance welded steel pipe or tube is preferably 20 % or more, and more preferably 30 % or more. No particular upper limit is placed on this volume fraction of ferrite. However, the upper limit is preferably about 90 % from an industrial standpoint.

### [Total volume fraction of ferrite and bainite]

When the total volume fraction of ferrite and bainite at the wall thickness center of the electric resistance weld portion of the electric resistance welded steel pipe or tube is less than 60 %, the ductility of the electric resistance weld portion is reduced, and the flattening value of the electric resistance weld portion intended in this disclosure cannot be obtained. Therefore, the total volume fraction of ferrite and bainite at the wall thickness center of the electric resistance weld portion of the electric resistance welded steel pipe or tube is 60 % or more. On the other hand, when the total volume fraction of ferrite and bainite at the wall thickness center of the electric resistance weld portion of the electric resistance welded steel pipe or tube exceeds 98 %, the strength of the electric resistance weld portion is reduced, and the desired Vickers hardness cannot be obtained. Moreover, strain is concentrated at the electric resistance weld portion during the flatness test. Thus, the desired flattening value of the electric resistance weld portion cannot be obtained.

Therefore, the total volume fraction of ferrite and bainite at the wall thickness center of the electric resistance weld portion of the electric resistance welded steel pipe or tube is 60 % or more and 98 % or less. The total volume fraction of ferrite and bainite at the wall thickness center of the electric resistance weld portion of the electric resistance welded steel pipe or tube is preferably 70 % or more, and more preferably 80 % or less. On the other hand, the total volume fraction of ferrite and bainite at the wall thickness center of the electric resistance weld portion of the electric resistance welded steel pipe or tube is preferably 96 % or less, and more preferably 94 % or less.

### [Balance containing one or more of pearlite, martensite, and austenite]

The balance at the wall thickness center of the electric resistance weld portion of the electric resistance welded steel pipe or tube contains one or more of pearlite, martensite, and austenite. This is because the balance needs to have a harder microstructure than ferrite and bainite to ensure the strength in the electric resistance weld portion. When the total volume fraction of these respective microstructures exceeds 40 %, the desired flattening value of the electric resistance weld portion cannot be obtained. Therefore, the total volume fraction of these respective microstructures is 40 % or less, preferably 30 % or less, and further preferably 20 % or less.

### [Average grain size of 15.0 µm or less]

When the average grain size of the crystal grains at the wall thickness center of the electric resistance weld portion of the electric resistance welded steel pipe or tube exceeds 15.0 µm, the strength of the electric resistance weld portion is reduced, and the desired Vickers hardness cannot be obtained. Moreover, strain is concentrated at the electric resistance weld portion during the flatness test. Thus, the desired flattening value of the electric resistance weld portion cannot be obtained. Therefore, the average grain size of the crystal grains at the wall thickness center of the electric resistance weld portion of the electric resistance welded steel pipe or tube is 15.0 µm or less. This average grain size of the crystal grains is preferably 10.0 µm or less. When this average grain size is too small, the ductility is likely to decrease, and the flattening value is likely to increase. Therefore, this average grain size is preferably 3.0 µm or more.

### [Chemical composition]

From the viewpoint of ensuring the above properties and steel microstructure, etc., the following describes the ranges of chemical composition in the electric resistance welded steel pipe or tube of this disclosure and the hot-rolled steel sheet used as material thereof, and the reasons for their limitations. In this specification, unless otherwise noted, "%" denote mass% in the chemical composition for steel (including steel sheet and steel pipe or tube).

### C: 0.020 % or more and 0.200 % or less

C is an element that increases the strength of steel through solid solution strengthening. To ensure the intended strength in this disclosure, the C content is 0.020 % or more. On the other hand, when the C content exceeds 0.200 %, hardenability increases, and hard pearlite, martensite, and austenite are excessively formed. Thus, the C content is 0.200 % or less. The C content is preferably 0.030 % or more. The C content is preferably 0.180 % or less. The C content is more preferably 0.040 % or more. The C content is more preferably 0.170 % or less.

### Si: 0.02 % or more and 1.00 % or less

Si is an element that increases the strength of steel through solid solution strengthening. To achieve such effect, the Si content is 0.02 % or more. On the other hand, when the Si content exceeds 1.00 %, ductility and toughness are reduced. In addition, the ductility of the electric resistance weld portion is reduced because the melting point of the oxide containing Si becomes higher and the oxide is likely to remain in the electric resistance weld portion. Therefore, the Si content is 1.00 % or less. The Si content is preferably 0.05 % or more. The Si content is preferably 0.90 % or less. The Si content is more preferably 0.10 % or more. The Si content is more preferably 0.80 % or less.

### Mn: 0.10 % or more and 2.50 % or less

Mn is an element that increases the strength of steel through solid solution strengthening. Mn is also an element that contributes to microstructure refinement by lowering the transformation start temperature. To ensure the strength and steel microstructure intended in this disclosure, the Mn content is 0.10 % or more. On the other hand, when the Mn content exceeds 2.50 %, hardenability increases, and hard pearlite, martensite, and austenite are excessively formed. Thus, the Mn content is 2.50 % or less. The Mn content is preferably 0.40 % or more. The Mn content is preferably 2.30 % or less. The Mn content is more preferably 0.50 % or more. The Mn content is more preferably 2.00 % or less.

### P: 0.050 % or less

P segregates at grain boundaries and causes material heterogeneity. Thus, the P content needs to be reduced as much as possible. The P content is within the range of 0.050 % or less. The P content is preferably 0.040 % or less, and more preferably 0.030 % or less. No particular lower limit is placed on the P content. However, an excessive reduction of the P content results in increase in steelmaking cost. Thus, the P content is preferably 0.001 % or more.

### S: 0.0200 % or less

S is usually present in steel as MnS. MnS is thinly stretched during the hot rolling step, adversely affecting ductility and toughness. Therefore, it is necessary to reduce the S content as much as possible in this disclosure. The S content is thus 0.0200 % or less. The S content is preferably 0.0100 % or less, and more preferably 0.0050 % or less. No particular lower limit is placed on the S content. However, an excessive reduction of the S content results in increase in steelmaking cost. Thus, the S content is preferably 0.0001 % or more.

### Al: 0.005 % or more and 0.100 % or less

Al is an element that acts as a strong deoxidizer. To obtain such effect, the Al content needs to be 0.005 % or more. On the other hand, when the Al content exceeds 0.100 %, weldability deteriorates and alumina inclusions increase, resulting in deterioration of surface characteristics. Toughness is also reduced. Therefore, the Al content is 0.100 % or less. The Al content is preferably 0.010 % or more. The Al content is preferably 0.080 % or less. The Al content is more preferably 0.015 % or more. The Al content is more preferably 0.070 % or less.

### N: 0.0100 % or less

N is an impurity that can be inevitably contained in steel, and is an element that acts to reduce ductility and toughness by firmly locking dislocation movement. In this disclosure, the N content is desirably reduced as much as possible as N is an impurity. However, a N content of up to 0.0100 % is acceptable. Therefore, the N content is 0.0100 % or less. The N content is preferably 0.0080 % or less. No particular lower limit is placed on the N content. However, an excessive reduction of the N content results in increase in refining cost. Thus, the N content is preferably 0.0010 % or more.

### Ti: 0.030 % or more and 0.200 % or less

Ti is an element that contributes to the strength improvement of steel by forming fine carbides and nitrides in steel, and also contributes to the reduction of solute N in steel due to its high affinity with N. To obtain the above effects, the Ti content needs to be 0.030 % or more. On the other hand, when the Ti content exceeds 0.200 %, coarse Ti-based inclusions are formed in the casting step. This makes it difficult to ensure the number density of Ti-based inclusions with a long diameter length of 5.0 µm or more, intended in this disclosure, resulting in reduced toughness. Ductility is also reduced. Therefore, the Ti content is 0.200 % or less. The Ti content is preferably 0.040 % or more. The Ti content is preferably 0.180 % or less. The Ti content is more preferably 0.050 % or more. The Ti content is more preferably 0.150 % or less.

The above chemical composition may further contain the following elements:
one or more of: Cu: 0.50 % or less, Ni: 0.50 % or less, Cr: 0.50 % or less, Mo: 0.50 % or less, Nb: 0.050 % or less, V: 0.050 % or less, Ca: 0.0050 % or less, and B: 0.0050 % or less.

### Cu: 0.50 % or less, Ni: 0.50 % or less, Cr: 0.50 % or less, Mo: 0.50 % or less

Cu, Ni, Cr, and Mo are elements that increase the hardenability of steel and increase the strength of the steel and can be contained in the chemical composition as needed. To obtain the above effect, when the chemical composition contains Cu, Ni, Cr, and Mo, it is desirable to contain Cu: 0.01 % or more, Ni: 0.01 % or more, Cr: 0.01 % or more, and Mo: 0.01 % or more, respectively. On the other hand, excessive Cu, Ni, Cr, and Mo contents may lead to excessive formation of hard pearlite, martensite, and austenite. In addition, defects are more likely to occur in the electric resistance weld portion, and the flattening value becomes larger (worse).

Therefore, when the chemical composition contains Cu, Ni, Cr, and Mo, it is preferable to contain Cu: 0.50 % or less, Ni: 0.50 % or less, Cr: 0.50 % or less, and Mo: 0.50 % or less, respectively.

That is, when the chemical composition contains Cu, Ni, Cr, and Mo, it is preferable to contain Cu: 0.01 % or more and 0.50 % or less, Ni: 0.01 % or more and 0.50 % or less, Cr: 0.01 % or more and 0.50 % or less, and Mo: 0.01 % or more and 0.50 % or less, respectively.

It is more preferable to contain Cu: 0.05 % or more, Ni: 0.05 % or more, Cr: 0.05 % or more, and Mo: 0.05 % or more. It is more preferable to contain Cu: 0.40 % or less, Ni: 0.40 % or less, Cr: 0.40 % or less, and Mo: 0.40 % or less. It is further preferable to contain Cu: 0.10 % or more, Ni: 0.10 % or more, Cr: 0.10 % or more, and Mo: 0.10 % or more. It is further preferable to contain Cu: 0.30 % or less, Ni: 0.30 % or less, Cr: 0.30 % or less, and Mo: 0.30 % or less.

### Nb: 0.050 % or less

Nb is an element that contributes to the strength improvement of steel by forming fine carbides and nitrides in the steel, and also contributes to microstructure refinement by suppressing austenite coarsening during hot rolling. To obtain the above effects, the Nb content is desirably 0.002 % or more. On the other hand, when the Nb content exceeds 0.050 %, ductility and toughness are reduced. Therefore, the Nb content is preferably 0.050 % or less. The Nb content is more preferably 0.005 % or more. The Nb content is more preferably 0.040 % or less. The Nb content is further preferably 0.010 % or more. The Nb content is further preferably 0.030 % or less.

### V: 0.050 % or less

V is an element that contributes to the strength improvement of steel by forming fine carbides and nitrides in the steel. To obtain the above effect, the V content is desirably 0.002 % or more. On the other hand, when the V content exceeds 0.050 %, ductility and toughness are reduced. Therefore, the V content is preferably 0.050 % or less. The V content is more preferably 0.005 % or more. The V content is more preferably 0.040 % or less. The V content is further preferably 0.010 % or more. The V content is further preferably 0.030 % or less.

### Ca: 0.0050 % or less

Ca is an element that contributes to the toughness improvement of steel by spheroidizing sulfides such as MnS that is thinly stretched during the hot rolling step, and can be contained in the chemical composition as needed. To obtain the above effect, when Ca is contained, the Ca content is desirably 0.0005 % or more. On the other hand, when the Ca content exceeds 0.0050 %, Ca oxide clusters are formed in the steel, and toughness deteriorates. Therefore, when Ca is contained, the Ca content is preferably 0.0050 % or less. The Ca content is more preferably 0.0008 % or more. The Ca content is more preferably 0.0045 % or less. The Ca content is further preferably 0.0010 % or more. The Ca content is further preferably 0.0040 % or less.

### B: 0.0050 % or less

B is an element that contributes to microstructure refinement by lowering the transformation start temperature, and can be contained in the chemical composition as needed. To obtain the above effect, when B is contained, the B content is desirably 0.0003 % or more. On the other hand, when the B content exceeds 0.0050 %, ductility and toughness deteriorate. Therefore, when B is contained, the B content is preferably 0.0050 % or less. The B content is more preferably 0.0005 % or more. The B content is more preferably 0.0040 % or less. The B content is further preferably 0.0008 % or more. The B content is further preferably 0.0030 % or less.

In the above chemical composition, the balance is Fe and inevitable impurities. However, it is acceptable to contain 0.0050 % or less of O (oxygen) as an inevitable impurity to the extent that the effect of this disclosure is not impaired.

The above components are contained in the chemical composition of the hot-rolled steel sheet and of the base metal portion of the electric resistance welded steel pipe or tube, in this disclosure. By satisfying this chemical composition, the properties intended in this disclosure can be obtained. The above chemical composition of the hot-rolled steel sheet substantially corresponds to the chemical composition of the steel material and molten steel used in its production.

In this disclosure, it is further preferred that the value of Mn/Si is 2.0 or more and 100.0 or less to reduce the flattening value of the electric resistance welded steel pipe or tube.

When Mn/Si is less than 2.0 or greater than 100.0, the melting point of Si-Mn oxides is high, and the Si-Mn oxides do not melt during electric resistance welding and remain in the electric resistance weld portion as inclusions. As a result, there may be a risk of increased (worsened) flattening value.

Mn/Si is more preferably 2.1 or more. Mn/Si is more preferably 90.0 or less. Mn/Si is further preferably 2.2 or more. Mn/Si is further preferably 80.0 or less.

### [Methods of producing hot-rolled steel sheet and electric resistance welded steel pipe or tube]

The following describes methods of producing a hot-rolled steel sheet and an electric resistance welded steel pipe or tube according to one of the disclosed embodiments.

The hot-rolled steel sheet of this disclosure can be produced by casting molten steel having the above chemical composition at an average cooling rate of 0.30 °C/s or more from the solidification point of this molten steel to 1200 °C to form a steel material (casting step); heating the steel material to a heating temperature in a range of 1150 °C or more and 1300 °C or less and then hot rolling the heated steel material with a rough rolling finish temperature of 950 °C or more and 1180 °C or less, a rolling finish temperature of 850 °C or more and 1000 °C or less, and a total rolling reduction in finish rolling of 50 % or more and 80 % or less to form a hot-rolled sheet (hot rolling step), then cooling the hot-rolled steel sheet at an average cooling rate in the mid-thickness of 10 °C/s or more and 60 °C/s or less and a cooling stop temperature in this mid-thickness of 400 °C or more and 580 °C or less (cooling step), and subsequently coiling the cooled hot-rolled steel sheet at a temperature of 400 °C or more and 580 °C or less (coiling step).

The electric resistance welded steel pipe or tube of this disclosure can be produced by forming the hot-rolled steel sheet produced as described above into a cylindrical shape by cold roll forming, butt-joining circumferential ends of the cylindrical shape, and then subjecting the circumferential ends to electric resistance welding to form an electric resistance welded steel pipe or tube (pipe or tube forming step), then heating the portion subjected to the electric resistance welding (electric resistance weld portion) to a temperature of 850 °C or more and 1050 °C or less, air cooling the portion for 5 seconds or more and 50 seconds or less, and then water cooling the portion to a temperature of 200 °C or less (weld portion heat treatment step), and subsequently adjusting the pipe or tube outer diameter by sizing rollers (sizing step).

In the following description of the production methods, the "°C" indication for temperature refers to the surface temperature of steel material or steel sheet (hot-rolled sheet), unless otherwise specified. Such a surface temperature can be measured with a radiation thermometer or similar device. The temperature in the mid-thickness of the steel sheet can be determined by calculating the temperature distribution in the steel sheet cross section by thermal analysis and correcting the result by the surface temperature of the steel sheet. The "hot-rolled steel sheet" includes a hot-rolled sheet and a hot-rolled steel strip.

The following describes a method of producing a hot rolled steel sheet of this disclosure.

In this disclosure, a method of obtaining steel material (steel slab) by steelmaking is not particularly limited. For example, any of the known steelmaking methods such as in a converter furnace, an electric furnace, a vacuum melting furnace, etc. are applicable. A casting method is also not particularly limited. For example, the steel material is produced with desired dimensions by a known casting method such as continuous casting. There is no problem in applying the ingot-casting and blooming method, instead of the continuous casting. The molten steel may be further subjected to secondary refining such as ladle refining.

### [Average cooling rate from solidification point to 1200 °C in casting step: 0.30 °C/s or more]

In the casting step, when the average cooling rate from the solidification point of the molten steel after the above steelmaking to 1200 °C is less than 0.30 °C/s, Ti-based inclusions coarsen. This makes it difficult to ensure the number density of Ti-based inclusions with a long diameter length of 5.0 µm or more, intended in this disclosure, resulting in reduced toughness. Therefore, the average cooling rate from the above solidification point to 1200 °C is 0.30 °C/s or more. This average cooling rate is preferably 0.35 °C/s or more, and more preferably 0.40 °C/s or more. No particular upper limit is placed on the above average cooling rate. When this average cooling rate exceeds 100 °C/s, the effect of toughness improvement on the increase in cooling rate becomes small, which only increases equipment load. Therefore, the average cooling rate from the above solidification point to 1200 °C is preferably 100 °C/s or less. This average cooling rate is more preferably 80 °C/s or less.

The above solidification point is determined by the following formula (1): Solidification point (°C) = 1539 - (70[C] + 8[Si] + 5[Mn] + 30[P] + 25[S] + 5[Cu] + 4[Ni] + 1.5[Cr])

However, in formula (1), the element symbol represents the content of each element in steel (mass%). Elements not contained in steel are assumed to be 0 %.

In this disclosure, the steel material (steel slab) obtained through the above casting is heated (reheated) to a heating temperature in the range of 1150 °C or more and 1300 °C or less, the heated steel material is then subjected to hot rolling (hot rolling step) to form a hot-rolled sheet, followed by cooling (cooling step), and the cooled hot-rolled sheet is then coiled (coiling step) to form a hot-rolled steel sheet.

### [Heating temperature in hot rolling step: 1150 °C or more and 1300 °C or less]

In the hot rolling step, when the heating temperature (reheating temperature) is less than 1150 °C, the deformation resistance of the rolled material increases to make rolling difficult. On the other hand, when the heating temperature exceeds 1300 °C, austenite grains coarsen, and fine austenite grains cannot be obtained in the subsequent rolling (rough rolling, finish rolling), making it difficult to ensure the average grain size intended in this disclosure. Therefore, the heating temperature in the hot rolling step is 1150 °C or more and 1300 °C or less. This heating temperature is preferably 1170 °C or more. This heating temperature is preferably 1280 °C or less.

In this disclosure, after the steel slab (slab) is produced, in addition to a conventional method in which the steel slab is once cooled to room temperature and then reheated, it is also possible to apply an energy saving process with hot direct rolling, without any problem, in which the steel slab is charged into a heating furnace as a warm slab without being cooled to room temperature or in which the steel slab is rolled immediately after slight heat retention.

### [Rough rolling finish temperature: 950 °C or more and 1180 °C or less]

In the hot rolling step, when the rough rolling finish temperature is less than 950 °C, the steel sheet surface temperature is the ferrite transformation start temperature or less during subsequent finish rolling, resulting in the formation of a large amount of ferrite. This makes it difficult to ensure the volume fraction of bainite intended in this disclosure, resulting in lower yield stress or tensile strength. On the other hand, when the rough rolling finish temperature exceeds 1180 °C, austenite grains coarsen to make it difficult to ensure the average grain size intended in this disclosure, resulting in reduced toughness.

Therefore, the rough rolling finish temperature in the hot rolling step is 950 °C or more and 1180 °C or less. The rough rolling finish temperature is more preferably 970 °C or more. The rough rolling finish temperature is more preferably 1150 °C or less.

### [Rolling finish temperature: 850 °C or more and 1000 °C or less]

In the hot rolling step, when the rolling finish temperature is less than 850 °C, the steel sheet surface temperature is the ferrite transformation start temperature or less during the finish rolling, resulting in the formation of a large amount of ferrite. This makes it difficult to ensure the volume fraction of bainite intended in this disclosure, resulting in lower yield stress or tensile strength. On the other hand, when the rolling finish temperature exceeds 1000 °C, austenite grains coarsen to make it difficult to ensure the average grain size intended in this disclosure, resulting in reduced toughness.

Therefore, the rolling finish temperature in the hot rolling step is 850 °C or more and 1000 °C or less. The rolling finish temperature is more preferably 870 °C or more. The rolling finish temperature is more preferably 980 °C or less.

### [Total rolling reduction in finish rolling: 50 % or more and 80 % or less]

In this disclosure, subgrains in austenite are refined in the hot rolling step to refine the microstructures of bainite and the balance, which are formed in the subsequent cooling and coiling steps, thus obtaining a steel microstructure having the yield stress intended in this disclosure. Therefore, to refine the subgrains in austenite in this hot rolling step, it is necessary to increase the rolling reduction at an austenite non-recrystallization temperature range and introduce sufficient work strain. To achieve this objective, the total rolling reduction in finish rolling is 50 % or more in this disclosure.

When the total rolling reduction in finish rolling is less than 50 %, sufficient work strain cannot be introduced during the hot rolling step. Therefore, the steel microstructure having the desired average grain size and volume fraction of crystal grains with a grain size of 40.0 µm or more, intended in this disclosure, cannot be obtained. The total rolling reduction in finish rolling is preferably 55 % or more. On the other hand, when this total rolling reduction exceeds 80 %, ferrite is likely to be formed to make it difficult to ensure the volume fraction of bainite intended in this disclosure, resulting in lower yield stress or tensile strength. Therefore, the total rolling reduction in finish rolling is 80 % or less. This total rolling reduction is preferably 75 % or less.

The above total rolling reduction in finish rolling refers to the sum of rolling reductions of the respective rolling passes in finish rolling.

In this disclosure, no particular upper and lower limits are placed on the finish sheet thickness. However, from the viewpoint of ensuring necessary rolling reduction and controlling steel sheet temperature, the finish sheet thickness (thickness of the steel sheet after finish rolling) is preferably in the range of 2 mm or more and 25 mm or less.

### [Average cooling rate in mid-thickness in cooling step: 10 °C/s or more and 60 °C/s or less]

After the hot rolling step, the cooling step is performed to cool the hot-rolled sheet.

When the average cooling rate in this cooling step is less than 10 °C/s, the volume fraction of ferrite in the steel microstructure increases, and the steel microstructure having the volume fraction of bainite intended in this disclosure cannot be obtained. In addition, the frequency of bainite nucleation is reduced, which coarsens bainite. Thus, the steel microstructure having the average grain size intended in this disclosure cannot be obtained. On the other hand, when the above average cooling rate exceeds 60 °C/s, a large amount of martensite is formed, resulting in reduced workability and toughness. Therefore, the above average cooling rate in the mid-thickness of the hot-rolled sheet is in the range of 10 °C/s or more and 60 °C/s or less.

The above average cooling rate is preferably 15 °C/s or more. The above average cooling rate is preferably 55 °C/s or less.

In this disclosure, from the viewpoint of suppressing ferrite formation on the steel sheet surface before the cooling step, it is preferable to start the cooling step immediately after the end of finish rolling in the hot rolling step.

### [Cooling stop temperature in mid-thickness in cooling step: 400 °C or more and 580 °C or less]

When the cooling stop temperature in the mid-thickness of the hot-rolled sheet in the cooling step is less than 400 °C, a large amount of martensite is formed, resulting in reduced workability and toughness. On the other hand, when this cooling stop temperature exceeds 580 °C, the volume fraction of ferrite increases, and the steel microstructure having the volume fraction of bainite intended in this disclosure cannot be obtained. In addition, the frequency of bainite nucleation is reduced, which coarsens bainite. Thus, the microstructure having the average grain size intended in this disclosure cannot be obtained. Therefore, the above cooling stop temperature is in the range of 400 °C or more and 580 °C or less.

The above cooling stop temperature is preferably 420 °C or more. The above cooling stop temperature is preferably 550 °C or less.

In this disclosure, the average cooling rate is a value determined by ((mid-thickness temperature of hot-rolled sheet before cooling - mid-thickness temperature of hot-rolled sheet after cooling) / cooling time).

A cooling method in the cooling step of this disclosure includes water cooling such as water jet from a nozzle, and cooling by injection of cooling gas. In this disclosure, it is preferable to apply cooling operations (treatment) to both sides of the hot-rolled sheet so that both sides of the hot-rolled sheet are cooled under the same conditions.

### [Temperature in mid-thickness in coiling step (coiling temperature): 400 °C or more and 580 °C or less]

After the cooling step, the coiling step is performed to coil the hot-rolled sheet. After the coiling step, the coiled hot-rolled sheet is allowed to cool.

When the above coiling temperature is less than 400 °C, a large amount of martensite is formed, resulting in reduced workability and toughness. On the other hand, when the above coiling temperature exceeds 580 °C, the volume fraction of ferrite increases. Thus, the steel microstructure having the volume fraction of bainite intended in this disclosure cannot be obtained. In addition, the frequency of bainite nucleation is reduced, which coarsens bainite. Thus, the microstructure having the average grain size intended in this disclosure cannot be obtained. Therefore, the above coiling temperature is in the range of 400 °C or more and 580 °C or less.

The above coiling temperature is preferably 420 °C or more. The above coiling temperature is preferably 550 °C or less.

The following describes a method of producing an electric resistance welded steel pipe or tube.

The hot-rolled steel sheet (hot-rolled steel sheet of this disclosure) obtained by the above coiling step is subjected to the pipe or tube forming step. In this pipe or tube forming step, the hot-rolled steel sheet is formed into a cylindrical open pipe or tube (round steel pipe or tube) by cold roll forming, and the circumferential ends (butt joints) of this cylindrical open pipe or tube are butt-joined and melted by high-frequency electric resistance heating, and subjected to electric resistance welding through pressure welding by upsetting with a squeeze roller to form an electric resistance welded steel pipe or tube.

The electric resistance welded steel pipe or tube produced in this way has a base metal portion, which is the above hot-rolled steel sheet, an electric resistance weld portion (also referred to as a bond portion or simply a weld portion), which is a portion subjected to the electric resistance welding, and a heat-affected zone formed on the base metal by the heat during this electric resistance welding.

After the pipe or tube forming step, the weld portion heat treatment step is applied to the above electric resistance welded steel pipe or tube. The electric resistance weld portion after the pipe or tube forming step has a lower ductility than the base metal portion because of rapid cooling after heating in the pipe or tube forming step. Therefore, in this weld portion heat treatment step, the strength, workability, and toughness of the electric resistance weld portion are simultaneously satisfied by appropriately cool the electric resistance weld portion after heating it.

The upset amount during the electric resistance welding (electric resistance welding step) is preferably 20 % or more of the sheet thickness of the hot-rolled steel sheet so that inclusions such as oxides and nitride, which cause toughness reduction, can be discharged together with molten steel during welding. However, when the upset amount exceeds 100 % of the sheet thickness, the load on the squeeze roller increases. Therefore, the upset amount is preferably 20 % or more of the sheet thickness. The upset amount is preferably 100 % or less of the sheet thickness. The upset amount is more preferably 40 % or more. The upset amount is more preferably 80 % or less.

The upset amount in this disclosure can be determined as ((circumferential length of open pipe or tube immediately before electric resistance welding) - (circumferential length of electric resistance welded steel pipe or tube immediately after electric resistance welding)) / (sheet thickness) × 100 (%).

### [Heating temperature in weld portion heat treatment step: 850 °C or more and 1050 °C or less]

When the heating temperature in the weld portion heat treatment step is less than 850 °C, the electric resistance weld portion does not completely transform to austenite, and the rapid cooled microstructure formed in the pipe or tube forming step remains, resulting in reduced ductility. Therefore, the desired flattening value of the electric resistance weld portion cannot be obtained. On the other hand, when the above heating temperature exceeds 1050 °C, the austenite grains coarsen and the nucleation sites of ferrite and bainite decrease, and the volume fraction of ferrite and the total volume fraction of ferrite and bainite, intended in this disclosure, cannot be obtained at the wall thickness center of the electric resistance weld portion. Thus, the desired flattening value of the electric resistance weld portion cannot be obtained, or the average grain size intended in this disclosure cannot be obtained.

### [Air cooling time in weld portion heat treatment step: 5 seconds or more and 50 seconds or less]

Air cooling after heating with the above heating temperature forms ferrite and bainite. When the air cooling time is less than 5 seconds, the desired volume fraction of ferrite and total volume fraction of ferrite and bainite cannot be obtained at the wall thickness center of the electric resistance weld portion, and the flattening value of the electric resistance weld portion, intended in this disclosure, cannot be obtained. On the other hand, when the above air cooling time exceeds 50 seconds, the average grain size intended in this disclosure cannot be obtained at the wall thickness center of the electric resistance weld portion. Alternatively, because the temperature falls below the Ms point during air cooling, the volume fraction of ferrite and the total volume fraction of ferrite and bainite, intended in this disclosure, cannot be obtained, and the desired flattening value of the electric resistance weld portion cannot be obtained.

### [Temperature after water cooling in weld portion heat treatment step: 200 °C or less]

Water cooling after the above air cooling completes the ferrite and bainite transformations. When the temperature after the water cooling exceeds 200 °C, ferrite and bainite coarsen, and the microstructure having the average grain size intended in this disclosure cannot be obtained.

After this weld portion heat treatment step, the sizing step is performed to adjust the pipe or tube outer diameter using sizing rollers. In this sizing step, the electric resistance welded steel pipe or tube is reduced in diameter using rollers placed at the top, bottom, left, and right of the electric resistance welded steel pipe or tube, and the outer diameter and roundness are adjusted to the desired values.

This sizing step is performed to improve outer diameter accuracy and roundness. To improve outer diameter accuracy and roundness, the steel pipe or tube is preferably reduced in diameter so that the total steel pipe or tube circumferential length is reduced at a rate of 0.5 % or more. On the other hand, when the steel pipe or tube is reduced in diameter so that the total steel pipe or tube circumferential length is reduced at a rate of more than 4.0 %, the amount of bending in the pipe or tube axial direction as the steel pipe or tube passes through the rollers increases, and the residual stress, dislocation density on the inner surface, and maximum low-angle grain boundary density of the steel pipe or tube all increase. As a result, the SSC resistance of the steel pipe or tube decreases. Therefore, it is preferable to reduce the steel pipe or tube in diameter so that the steel pipe or tube circumferential length is reduced at a rate of 0.5 % or more and 4.0 % or less. The diameter reduction rate of the steel pipe or tube circumferential length is more preferably 1.0 % or more. The diameter reduction rate of the steel pipe or tube circumferential length is more preferably 3.0 % or less.

In this sizing step, it is preferable to perform multi-stage diameter reduction using multiple stands in order to minimize the amount of bending in the pipe or tube axial direction as the steel pipe or tube passes through the rollers and to suppress the generation of residual stress in the pipe or tube axial direction. The diameter reduction in each stand is preferably performed so that the pipe or tube circumferential length is reduced at a rate of 1.0 % or less.

Whether the steel pipe or tube is an electric resistance welded steel pipe or tube can be determined by cutting the electric resistance welded steel pipe or tube perpendicular to the pipe or tube axial direction, etching the cut surface including the weld portion (electric resistance weld portion) after polishing, and then observing it using an optical microscopy. Specifically, the steel pipe or tube is an electric resistance welded steel pipe or tube if the width in the pipe or tube circumferential direction of the bond portion of the weld portion (electric resistance weld portion) is 1.0 µm or more and 1000 µm or less over the entire pipe or tube thickness.

The etching solution used for the above etching after polishing may be selected appropriate for the steel composition and the type of steel pipe or tube.

FIG. 1 schematically illustrates a portion of the above cross section (near the weld portion of the electric resistance welded steel pipe or tube) after the etching. The bond portion (weld portion) is visible as a region (bond portion 3) having different microstructure morphology and contrast from a base metal portion 1 and a heat-affected zone 2, as illustrated in FIG. 1. For example, the bond portion 3 of an electric resistance welded steel pipe or tube formed of carbon steel and low-alloy steel can be identified as a region observed white by the optical microscopy in the above cross section etched with nital. The bond portion 3 of a UOE steel pipe or tube formed of carbon steel and low-alloy steel can be identified by the optical microscopy as a region containing a cellular or dendrite-like solidification microstructure, in the above cross section etched with nital.

The conditions of such method of producing a steel sheet and a steel pipe or tube, which are not described above, can all follow the conventional methods.

### EXAMPLES

The present disclosure will be described in more detail based on examples below. However, the present disclosure is not limited to the following examples.

### (Production of hot-rolled steel sheet)

Molten steel having each chemical composition presented in Table 1 was obtained by steelmaking.

### [Table 1]

**Table 1**

| Steel No. | Chemical composition (mass%) | | | | | | | | | | | | | | | | |
|---|---|---|---|---|---|---|---|---|---|---|---|---|---|---|---|---|---|
| | C | Si | Mn | P | S | Al | N | Ti | Cu | Ni | Cr | Mo | Nb | V | Ca | B | Mn/Si |
| 1 | 0.161 | 0.45 | 1.97 | 0.016 | 0.0017 | 0.024 | 0.0036 | 0.078 | - | - | - | - | - | - | - | - | 4.4 |
| 2 | 0.043 | 0.78 | 2.14 | 0.009 | 0.0006 | 0.035 | 0.0041 | 0.059 | 0.16 | 0.13 | - | - | - | - | - | - | 2.7 |
| 3 | 0.120 | 0.07 | 1.83 | 0.017 | 0.0015 | 0.031 | 0.0033 | 0.138 | - | - | 0.24 | 0.12 | - | - | - | - | 26.1 |
| 4 | 0.075 | 0.66 | 1.55 | 0.030 | 0.0024 | 0.022 | 0.0038 | 0.055 | - | - | - | - | 0.015 | 0.012 | - | - | 2.3 |
| 5 | 0.106 | 0.24 | 1.48 | 0.025 | 0.0011 | 0.030 | 0.0040 | 0.092 | - | - | - | - | - | - | 0.0021 | 0.0013 | 6.2 |
| 6 | 0.218 | 0.13 | 1.45 | 0.008 | 0.0013 | 0.041 | 0.0029 | 0.049 | - | - | - | - | - | - | - | - | 11.2 |
| 7 | 0.059 | 1.06 | 1.23 | 0.007 | 0.0004 | 0.024 | 0.0039 | 0.058 | - | - | - | - | - | - | - | - | 1.2 |
| 8 | 0.072 | 0.48 | 2.70 | 0.011 | 0.0009 | 0.021 | 0.0037 | 0.071 | - | - | - | - | - | - | - | - | 5.6 |
| 9 | 0.121 | 0.22 | 1.32 | 0.026 | 0.0010 | 0.044 | 0.0024 | 0.016 | - | - | - | - | - | - | - | - | 6.0 |
| 10 | 0.104 | 0.64 | 1.97 | 0.019 | 0.0026 | 0.033 | 0.0026 | 0.207 | - | - | - | - | - | - | - | - | 3.1 |
| 11 | 0.068 | 0.23 | 1.49 | 0.011 | 0.0023 | 0.038 | 0.0038 | 0.080 | - | - | - | - | - | - | - | - | 6.5 |
| 12 | 0.070 | 0.38 | 1.44 | 0.008 | 0.0018 | 0.039 | 0.0040 | 0.038 | - | - | 0.15 | - | - | - | - | - | 3.8 |
| 13 | 0.096 | 0.13 | 1.03 | 0.014 | 0.0009 | 0.040 | 0.0035 | 0.089 | - | - | - | - | - | - | - | - | 7.9 |
| 14 | 0.078 | 0.55 | 1.22 | 0.012 | 0.0010 | 0.035 | 0.0032 | 0.105 | - | - | - | - | - | - | - | - | 2.2 |
| 15 | 0.061 | 0.44 | 1.01 | 0.019 | 0.0026 | 0.028 | 0.0031 | 0.098 | - | - | - | - | - | - | - | - | 2.3 |
| - In the chemical composition, the balance other than the above is Fe and inevitable impurities. | | | | | | | | | | | | | | | | | |
| - The underlined values represent values outside the range of this disclosure. | | | | | | | | | | | | | | | | | |

The above molten steel was subjected to the casting step under the conditions presented in Table 2 and formed into slab (steel material). This slab was then subjected to the hot rolling step, and coiling step under the conditions presented in Table 2 to obtain a hot-rolled steel sheet.

### [Table 2]

**Table 2**

| Test No. | Steel No. | Casting step | Hot rolling step | | | | Cooling step | | Coiling step |
|---|---|---|---|---|---|---|---|---|---|
| | | Average cooling rate *1 (°C/s) | Heating temperature (°C) | Rough rolling finish temperature (°C) | Rolling finish temperature (°C) | Total rolling reduction in finish rolling (%) | Average cooling rate *2 (°C/s) | Cooling stop temperature *2 (°C) | Coiling temperature (°C) |
| 1 | 1 | 0.52 | 1250 | 1140 | 940 | 68 | 53 | 440 | 420 |
| 2 | 2 | 0.39 | 1190 | 1120 | 950 | 55 | 32 | 420 | 410 |
| 3 | 3 | 0.42 | 1230 | 1100 | 920 | 56 | 45 | 540 | 510 |
| 4 | 4 | 0.69 | 1210 | 1090 | 890 | 70 | 18 | 490 | 470 |
| 5 | 5 | 0.55 | 1200 | 1150 | 910 | 59 | 37 | 470 | 460 |
| 6 | 6 | 0.44 | 1180 | 990 | 870 | 65 | 16 | 520 | 490 |
| 7 | 7 | 0.37 | 1200 | 1120 | 940 | 66 | 22 | 430 | 410 |
| 8 | 8 | 0.75 | 1200 | 1100 | 910 | 64 | 46 | 520 | 490 |
| 9 | 9 | 0.43 | 1170 | 1130 | 960 | 61 | 44 | 550 | 510 |
| 10 | 10 | 0.41 | 1220 | 990 | 890 | 67 | 19 | 470 | 450 |
| 11 | 11 | 0.26 | 1250 | 1160 | 950 | 72 | 38 | 460 | 430 |
| 12 | 12 | 0.66 | 1320 | 1200 | 1030 | 59 | 36 | 470 | 440 |
| 13 | 13 | 0.45 | 1190 | 1160 | 980 | 47 | 40 | 510 | 490 |
| 14 | 14 | 0.56 | 1220 | 1140 | 960 | 59 | 45 | 490 | 460 |
| 15 | 15 | 0.60 | 1200 | 1110 | 940 | 63 | 37 | 460 | 420 |
| - The underlined values represent values outside the range of this disclosure. | | | | | | | | | |
| *1: Average cooling rate from solidification point of steel to 1200 °C | | | | | | | | | |
| *2: Numerical value in mid-thickness | | | | | | | | | |

Various test pieces were taken from the above hot-rolled steel sheet and subjected to microstructure observation, measurement of the average grain size, measurement of the volume fraction of crystal grains with a grain size of 40.0 µm or more, measurement of the number density of Ti-based inclusions with a long diameter length of 5.0 µm or more, tensile test, and Charpy impact test by the methods described below. The various test pieces were taken from the center in the width direction of the hot-rolled steel sheet. The results are presented in Table 3.

### [Table 3]

**Table 3**

| Test No. | Steel No. | Microstructure of hot-rolled steel sheet | | | | | Mechanical properties of hot-rolled steel sheet | | | | | Remarks |
|---|---|---|---|---|---|---|---|---|---|---|---|---|
| | | B Fraction (%) | Residual microstructure | Average grain size (µm) | Volume fraction *3 (%) | Number density *4 (pieces/mm²) | YS (MPa) | TS (MPa) | YR (%) | EL (%) | vE₋₆₀ (J/cm²) | |
| 1 | 1 | 98 | M | 4.3 | 21 | 8 | 710 | 819 | 86.7 | 23 | 108 | Hot-rolled steel sheet 1 (Example) |
| 2 | 2 | 96 | M, A | 5.2 | 33 | 11 | 738 | 841 | 87.8 | 19 | 142 | Hot-rolled steel sheet 2 (Example) |
| 3 | 3 | 92 | M | 5.5 | 34 | 12 | 719 | 823 | 87.4 | 22 | 129 | Hot-rolled steel sheet 3 (Example) |
| 4 | 4 | 97 | F, M | 6.4 | 18 | 7 | 746 | 877 | 85.1 | 18 | 116 | Hot-rolled steel sheet 4 (Example) |
| 5 | 5 | 94 | M, A | 4.9 | 22 | 15 | 682 | 797 | 85.6 | 28 | 134 | Hot-rolled steel sheet 5 (Example) |
| 6 | 6 | 83 | P, M, A | 6.1 | 35 | 18 | 725 | 854 | 84.9 | 17 | 63 | Hot-rolled steel sheet 6 (Comparative Example) |
| 7 | 7 | 99 | F, M | 5.7 | 23 | 10 | 754 | 860 | 87.7 | 13 | 82 | Hot-rolled steel sheet 7 (Comparative Example) |
| 8 | 8 | 86 | M, A | 4.5 | 16 | 15 | 731 | 862 | 84.8 | 16 | 51 | Hot-rolled steel sheet 8 (Comparative Example) |
| 9 | 9 | 97 | M | 5.8 | 18 | 5 | 615 | 706 | 87.1 | 27 | 156 | Hot-rolled steel sheet 9 (Comparative Example) |
| 10 | 10 | 95 | M | 4.9 | 19 | 23 | 714 | 828 | 86.2 | 11 | 88 | Hot-rolled steel sheet 10 (Comparative Example) |
| 11 | 11 | 99 | F, M | 6.6 | 20 | 25 | 696 | 803 | 86.7 | 25 | 67 | Hot-rolled steel sheet 11 (Comparative Example) |
| 12 | 12 | 98 | M | 10.8 | 32 | 9 | 633 | 732 | 86.5 | 28 | 81 | Hot-rolled steel sheet 12 (Comparative Example) |
| 13 | 13 | 96 | M | 6.3 | 43 | 15 | 698 | 816 | 85.5 | 24 | 66 | Hot-rolled steel sheet 13 (Comparative Example) |
| 14 | 14 | 92 | M | 5.1 | 31 | 11 | 711 | 840 | 84.6 | 20 | 139 | Hot-rolled steel sheet 14 (Example) |
| 15 | 15 | 94 | M | 6.0 | 22 | 13 | 702 | 834 | 84.2 | 22 | 122 | Hot-rolled steel sheet 15 (Example) |
| - B fraction represents the volume fraction of bainite. | | | | | | | | | | | | |
| - The residual microstructure is represented as follows: F: ferrite, P: pearlite, M: Martensite, and A: austenite, respectively. | | | | | | | | | | | | |
| - The underlined values represent values outside the range of this disclosure. | | | | | | | | | | | | |
| *3: Volume fraction of crystal grains with a grain size of 40.0 µm or more | | | | | | | | | | | | |
| *4: Number density of Ti-based inclusions with a long diameter length of 5.0 µm or more | | | | | | | | | | | | |

### (Production of electric resistance welded steel pipe or tube)

The resulting hot-rolled steel sheet was then formed into a cylindrical open pipe or tube (round steel pipe or tube) by cold roll forming, and the butt joints of the open pipe or tube were subjected to electric resistance welding to form a steel pipe or tube material (pipe or tube forming step). The steel pipe or tube material was then subjected to the weld portion heat treatment step under the conditions presented in Table 4. The steel pipe or tube material after this weld portion heat treatment step was reduced in diameter by rollers placed at the top, bottom, left, and right of this steel pipe or tube material (sizing step) to obtain an electric resistance welded steel pipe or tube with an outer diameter D (mm) and a wall thickness t (mm) presented in Table 4.

### [Table 4]

**Table 4**

| Test No. | Hot-rolled steel sheet No. | Weld portion heat treatment step | | | Steel pipe or tube dimensions | |
|---|---|---|---|---|---|---|
| | | Heating temperature (°C) | Air cooling time (s) | Temperature after water cooling (°C) | Outer diameter D (mm) | Wall thickness t (mm) |
| 1 | 1 | 960 | 32 | 120 | 160 | 8.0 |
| 2 | 2 | 880 | 15 | 110 | 120 | 6.5 |
| 3 | 3 | 1010 | 26 | 150 | 175 | 12.0 |
| 4 | 4 | 910 | 40 | 90 | 110 | 3.0 |
| 5 | 5 | 900 | 16 | 110 | 130 | 6.0 |
| 6 | 6 | 1000 | 44 | 170 | 150 | 7.0 |
| 7 | 7 | 960 | 25 | 110 | 140 | 5.5 |
| 8 | 8 | 940 | 40 | 130 | 110 | 4.0 |
| 9 | 9 | 970 | 13 | 130 | 120 | 6.0 |
| 10 | 10 | 870 | 32 | 140 | 120 | 6.0 |
| 11 | 11 | 920 | 33 | 90 | 110 | 7.0 |
| 12 | 12 | 950 | 25 | 150 | 120 | 5.0 |
| 13 | 13 | 900 | 18 | 120 | 110 | 5.0 |
| 14 | 14 | 900 | 54 | 160 | 110 | 5.0 |
| 15 | 15 | 1070 | 11 | 140 | 100 | 6.0 |

Various test pieces were taken from the above electric resistance welded steel pipe or tube and subjected to microstructure observation, measurement of the average grain size, measurement of the volume fraction of crystal grains with a grain size of 40.0 µm or more, measurement of the number density of Ti-based inclusions with a long diameter length of 5.0 µm or more, tensile test, Charpy impact test, Vickers hardness test, and flatness test by the methods described below. The various test pieces were each taken from the electric resistance weld portion in the electric resistance welded steel pipe or tube and from the base metal portion 90° away from this electric resistance weld portion in the pipe or tube circumferential direction when the electric resistance weld portion was set at 0°. The results are presented in Table 5.

### [Table 5]

**Table 5**

| Test No. | Hot rolling steel sheet No. | Steel microstructure of electric resistance welded steel pipe or tube | | | | | | | | | | Mechanical properties of electric resistance welded steel pipe or tube | | | | | | | Remarks (as electric resistance welded steel pipe or tube) |
|---|---|---|---|---|---|---|---|---|---|---|---|---|---|---|---|---|---|---|---|
| | | Base metal portion | | | | | Electric resistance weld portion | | | | | Base metal portion | | | | | Electric resistance weld portion | | |
| | | B fraction (%) | Residual microstructure | Average grain size (µm) | Volume fraction *³ (%) | Number density *4 (pieces/mm²) | F fraction (%) | B fraction (%) | F+B fraction (%) | Residual microstructure | Average grain size (µm) | YS (MPa) | TS (MPa) | YR (%) | EL (%) | vE.₂₀ (J/cm²) | Vickers hardness (HV) | Flattening value | |
| 1 | 1 | 99 | M | 4.4 | 24 | 8 | 55 | 39 | 94 | P, M, A | 8.1 | 753 | 846 | 890 | 24 | 64 | 225 | 0.66 | Example |
| 2 | 2 | 95 | M, A | 5.2 | 30 | 11 | 62 | 35 | 97 | M | 6.4 | 795 | 874 | 91.0 | 20 | 87 | 217 | 0.45 | Example |
| 3 | 3 | 94 | M | 5.7 | 33 | 17 | 34 | 55 | 89 | M,A | 5.9 | 819 | 872 | 93.9 | 17 | 59 | 230 | 0.52 | Example |
| 4 | 4 | 99 | F | 6.4 | 13 | 8 | 84 | 11 | 95 | M | 8.7 | 824 | 889 | 927 | 16 | 62 | 215 | 0.38 | Example |
| 5 | 5 | 97 | M, A | 5.2 | 26 | 17 | 69 | 18 | 87 | M | 6.6 | 768 | 845 | 90.9 | 22 | 77 | 211 | 0.68 | Example |
| 6 | 6 | 80 | P,M,A | 59 | 34 | 14 | 40 | 46 | 86 | P, M | 7.0 | 823 | 894 | 921 | 16 | 34 | 246 | 0.70 | Comparative Example |
| 7 | 7 | 96 | F, M | 5.5 | 23 | 11 | 53 | 44 | 97 | M | 6.1 | 836 | 897 | 93.2 | 12 | 28 | 222 | 084 | Comparative Example |
| 8 | 8 | 88 | M, A | 4.8 | 19 | 15 | 25 | 56 | 81 | M | 6.6 | 820 | 881 | 93.1 | 18 | 12 | 241 | 0.77 | Comparative Example |
| 9 | 9 | 97 | M | 5.6 | 14 | 6 | 78 | 16 | 94 | M | 7.2 | 701 | 738 | 950 | 23 | 91 | 193 | 0.51 | Comparative Example |
| 10 | 10 | 98 | M | 4.9 | 21 | 24 | 80 | 13 | 93 | M | 7.3 | 795 | 860 | 92.4 | 14 | 23 | 237 | 0.69 | Comparative Example |
| 11 | 11 | 98 | F, M | 68 | 22 | 26 | 59 | 31 | 90 | M | 6.3 | 776 | 836 | 92.8 | 20 | 36 | 218 | 0.55 | Comparative Example |
| 12 | 12 | 95 | M | 10.6 | 35 | 7 | 42 | 50 | 92 | M | 6.7 | 679 | 748 | 90.8 | 21 | 19 | 221 | 0.49 | Comparative Example |
| 13 | 13 | 99 | M | 6.2 | 44 | 18 | 37 | 56 | 93 | M | 5.8 | 782 | 843 | 928 | 19 | 24 | 239 | 0.67 | Comparative Example |
| 14 | 14 | 91 | M | 5.0 | 33 | 14 | 89 | 0 | 89 | P | 170 | 811 | 877 | 925 | 22 | 67 | 184 | 0.82 | Comparative Example |
| 15 | 15 | 94 | M | 59 | 25 | 10 | 8 | 46 | 54 | M | 5.2 | 808 | 869 | 93.0 | 18 | 55 | 268 | 0.92 | Comparative Example |
| - F fraction represents the volume fraction of ferrite, and B fraction represents the volume fraction of bainite. | | | | | | | | | | | | | | | | | | | |
| - The residual microstructure is represented as follows: F: ferrite, P: pearlite, M: Martensite, and A: austenite, respectively. | | | | | | | | | | | | | | | | | | | |
| - The underlined values represent values outside the range of this disclosure. | | | | | | | | | | | | | | | | | | | |
| *3: Volume fraction of crystal grains with a grain size of 40.0 µm or more | | | | | | | | | | | | | | | | | | | |
| *4: Number density of Ti-based inclusions with a long diameter length of 5.0 µm or more | | | | | | | | | | | | | | | | | | | |

The specific methods of various observations, measurements, and tests are as follows.

### [Microstructure observation]

Test pieces for microstructure observation were produced by taking them from each of the hot-rolled steel sheet and the electric resistance welded steel pipe or tube and mirror polishing them, so that, for the hot-rolled steel sheet, the observation plane was a cross section parallel to both the rolling direction and the sheet thickness direction of the hot-rolled steel sheet, while, for the base metal portion of the electric resistance welded steel pipe or tube, the observation plane was a cross section parallel to both the pipe or tube axial direction and the wall thickness direction of the electric resistance welded steel pipe or tube pipe, and for the electric resistance weld portion of the electric resistance welded steel pipe or tube, the observation plane was a cross section parallel to both the pipe or tube circumferential direction and the wall thickness direction of the electric resistance welded steel pipe or tube.

The microstructure observation was performed using an optical microscopy (magnification: 1000×) or a scanning electron microscope (SEM, magnification: 1000×) after nital etching on the above observation planes of the test pieces, to observe and image the microstructure at the sheet thickness center for the hot-rolled steel sheet and at the wall thickness center for the base metal portion of the electric resistance welded steel pipe or tube and for the electric resistance weld portion of the electric resistance welded steel pipe or tube. From the resulting optical microscopy and SEM images, each area ratio of bainite, ferrite, and the balance (pearlite, martensite, and austenite) was determined. The area ratio of each microstructure was observed in five fields of view, and the values obtained in each field of view were averaged to obtain the average value. In this example, the area ratio obtained from the microstructure observation was used as the volume fracture of each microstructure.

Here, ferrite is a product of diffusional transformation, which presents a nearly recovered microstructure with a low dislocation density. This includes polygonal ferrites and pseudo-polygonal ferrites.

Bainite is a lath-like ferrite-cementite multi-phase structure with a high dislocation density.

Pearlite is a co-deposited microstructure (ferrite + cementite) of iron and iron carbides, which presents a lamellar microstructure with alternating linear ferrite and cementite.

Martensite is a lath-like low-temperature transformed microstructure with an extremely high dislocation density. In the SEM image, martensite exhibits brighter contrast compared with ferrite and bainite.

It is difficult to distinguish between martensite and austenite in the optical microscopy and SEM images. Thus, the area ratio of the microstructure observed as martensite or austenite was measured from the obtained SEM images, and the volume fraction of austenite measured by the following method was subtracted from the measured area ratio to obtain the volume fraction of martensite.

The above volume fraction of austenite was measured by X-ray diffraction. The test pieces for the measurement at the sheet thickness center of the hot-rolled steel sheet and at the wall thickness center of the base metal portion of the electric resistance welded steel pipe or tube were produced by grinding each test piece so that the diffraction planes were at the sheet thickness center of the hot-rolled steel sheet and at the wall thickness center of the base metal portion of the electric resistance welded steel pipe or tube, followed by chemical polishing to remove the surface processed layer. The Kα beam of Mo was used for the measurement, and each integrated intensity of the (200), (220), and (3 11) planes of fcc iron and the (200) and (211) planes of bcc iron was determined. Assuming that the normalized integrated intensity obtained by dividing each determined value by the theoretical intensity value was proportional to the volume fraction of each phase, the ratio of the normalized integrated intensity of austenite was determined to obtain the volume fraction of austenite.

### [Measurement of average grain size]

In measuring the average grain size, the SEM/EBSD method was first used to calculate a histogram of the grain size distribution (graph with horizontal axis: grain size and vertical axis: present percentage at each grain size), and the arithmetic average of grain sizes was then determined. Specifically, for the crystal grain size, the orientation difference between adjacent crystal grains was determined, the boundaries where the orientation difference is 15° or more were used as crystal grains (crystal grain boundaries), the equivalent circular diameters of the crystal grains were measured, and the average equivalent circular diameter was used as an average grain size. The equivalent circular diameter was defined as the diameter of a circle whose area is equal to that of the target crystal grain.

### [Measurement of volume fracture of crystal grains with grain size of 40.0 µm or more]

The volume fraction of crystal grains with a grain size of 40.0 µm or more was determined as the sum of area ratios of crystal grains with a grain size of 40.0 µm or more, from the above histogram of the crystal grain size distribution.

As for the conditions of the above measurement, the accelerating voltage was 15 kV, the measurement region was 500 µm × 500 µm, and the measurement step size was 0.5 µm. In the crystal grain size analysis, crystal grains with a grain size of 2.0 µm or less were excluded from the analysis target as measurement noise, and the obtained area ratio was considered to be equal to the volume fraction.

### [Measurement of number density of Ti-based inclusions with long diameter length of 5.0 µm or more]

The number density of Ti-based inclusions with a long diameter length of 5.0 µm or more was determined by combining the long diameter length measurement of inclusions using the SEM and the element analysis by the SEM/EDS method in the same field of view, at the cross section parallel to both the rolling direction and the sheet thickness direction of the hot-rolled steel sheet and at the cross section parallel to both the pipe or tube axial direction and the wall thickness direction of the base metal portion of the electric resistance welded steel pipe or tube. The measurement positions were at the sheet thickness center of the hot-rolled steel sheet and at the wall thickness center of the base metal portion of the electric resistance welded steel pipe or tube, the measurement region was 4 mm × 10 mm, and the measurement values in five fields of view were averaged.

### [Tensile test]

For tensile test pieces, in the hot-rolled steel sheet, JIS No. 5 tensile test pieces were taken so that the tensile direction was parallel to the rolling direction. On the other hand, in the electric resistance welded steel pipe or tube, JIS No. 11 tensile test pieces were taken so that the tensile direction was parallel to the pipe or tube axial direction. The tensile test was conducted in accordance with the provisions of JIS Z 2241. A yield stress YS (MPa), a tensile strength TS (MPa), and a total elongation EL (%) were measured, and a yield ratio YR (%) defined as (YS/TS) × 100 was calculated.

### [Charpy impact test]

In the hot-rolled steel sheet, the Charpy impact test was conducted at - 60 °C in accordance with the provisions of JIS Z 2242 to determine the absorbed energy, by taking V-notch test pieces from the sheet thickness center so that the longitudinal direction of the test pieces was parallel to the rolling direction. On the other hand, in the electric resistance welded steel pipe or tube, the Charpy impact test was conducted at -20 °C in accordance with the provisions of JIS Z 2242 to determine the absorbed energy, by taking V-notch test pieces from the wall thickness center of the base metal portion so that the longitudinal direction of the test pieces was parallel to the pipe or tube axial direction. The impact value was determined by dividing the absorbed energy by the pre-test cross sectional area of the fracture surface.

The number of tests for the above Charpy impact test was three for each case, and each average value of the obtained impact values was used as the Charpy impact value (vE₋₆₀) of the hot-rolled steel sheet and the Charpy impact value (vE₋₂₀) of the base metal portion of the electric resistance welded steel pipe or tube.

### [Vickers hardness test]

The Vickers hardness test was conducted in accordance with the provisions of JIS Z 2244 by taking test pieces from the electric resistance weld portion of the electric resistance welded steel pipe or tube so that the measurement plane was a cross section parallel to both the pipe or tube circumferential direction and the wall thickness direction. The load was 0.1 kgf, and the measurement position was at the wall thickness center of the weld portion.

### [Flattening test]

The flattening test was conducted in accordance with the method described in JIS G 3441 by taking annular test pieces with a length in the pipe or tube axial direction of 100 mm from the obtained electric resistance welded steel pipe or tube and polishing the pipe or tube outer surface at the weld portion to produce a metallic luster. The compression speed was 10 mm/min. Compression was stopped when cracking occurred, and a test piece height H at this time point was measured. The flattening value was determined by a formula H/D, with the outer diameter of the steel pipe or tube as D.

In Table 3, hot-rolled steel sheets in No. 1 to No. 5 and hot-rolled steel sheets in No. 14 and No. 15 are examples of this disclosure, while hot-rolled steel sheet in No. 6 to No. 13 are comparative examples.

In Table 5, electric resistance welded steel pipes or tubes in No. 1 to No. 5 are examples of this disclosure, while electric resistance welded steel pipes or tubes in No. 6 to No. 15 are comparative examples.

For the hot-rolled steel sheets of the examples of this disclosure presented in Table 3, in all of their steel microstructures at the sheet thickness center, the volume fraction of bainite was 90 % or more, the balance contained one or more of ferrite, pearlite, martensite, and austenite, the average grain size was 10.0 µm or less, the volume fraction of crystal grains with a grain size of 40.0 µm or more was 40 % or less, and the number density of Ti-based inclusions with a long diameter length of 5.0 µm or more was 20 pieces/mm² or less.

On the other hand, for the electric resistance welded steel pipes or tubes of the examples of this disclosure presented in Table 5, in all of their steel microstructures at the wall thickness center of the base metal portion, the volume fraction of bainite was 90 % or more, the balance contained one or more of ferrite, pearlite, martensite, and austenite, the average grain size was 10.0 µm or less, the volume fraction of crystal grains with a grain size of 40.0 µm or more was 40 % or less, the number density of Ti-based inclusions with a long diameter length of 5.0 µm or more was 20 pieces/mm² or less, while in their steel microstructures at the wall thickness center of the electric resistance weld portion, the volume fraction of ferrite was 10 % or more, the total volume fraction of ferrite and bainite was 60 % or more and 98 % or less, the balance contained one or more of pearlite, martensite, and austenite, and the average grain size was 15.0 µm or less.

In all of the hot-rolled steel sheets of the examples of this disclosure presented in Table 3, the yield stress YS was 650 MPa or more, the tensile strength TS was 750 MPa or more, the yield ratio YR was 90.0 % or less, the total elongation EL was 15 % or more, and the Charpy impact value at -60 °C was 100 J/cm² or more.

On the other hand, for the electric resistance welded steel pipes or tubes of the examples of this disclosure presented in Table 5, in the base metal portion, the yield stress YS was 650 MPa or more, the tensile strength TS was 750 MPa or more, the yield ratio YR was 96.0 % or less, the total elongation EL was 15 % or more, and the Charpy impact value at -20 °C was 50 J/cm² or more, and in the electric resistance weld portion, the Vickers hardness at the wall thickness center was 200 HV or more, and the flattening value was 0.80 or less.

In contrast, in the hot-rolled steel sheet and the electric resistance welded steel pipe or tube in No. 6 of the comparative examples, the volume fraction of bainite was below the range of this disclosure due to a high C content, and the Charpy impact value did not reach the desired value.

In the hot-rolled steel sheet and the electric resistance welded steel pipe or tube in No. 7 of the comparative examples, the total elongation and Charpy impact value, and the flattening value of the electric resistance welded steel pipe or tube did not reach the desired values due to a high Si content.

In the hot-rolled steel sheet and the electric resistance welded steel pipe or tube in No. 8 of the comparative examples, the volume fraction of bainite was below the range of this disclosure due to a high Mn content, and the Charpy impact value did not reach the desired value.

In the hot-rolled steel sheet and the electric resistance welded steel pipe or tube in No. 9 of the comparative examples, the yield stress or tensile strength did not reach the desired values due to a low Ti content.

In the hot-rolled steel sheet and the electric resistance welded steel pipe or tube in No. 10 of the comparative examples, the number density of Ti-based inclusions with a long diameter length of 5.0 µm or more exceeded the range of this disclosure due to a high Ti content, and the Charpy impact value did not reach the desired value.

In the hot-rolled steel sheet and the electric resistance welded steel pipe or tube in No. 11 of the comparative examples, the number density of Ti-based inclusions with a long diameter length of 5.0 µm or more exceeded the range of this disclosure due to a low average cooling rate in the casting step, and the Charpy impact value did not reach the desired value.

In the hot-rolled steel sheet and the electric resistance welded steel pipe or tube in No. 12 of the comparative examples, the average grain size exceeded the range of this disclosure due to high reheating temperature, rough rolling finish temperature, and rolling finish temperature in the hot rolling step, and the yield stress and/or tensile strength and the Charpy impact value did not reach the desired values.

In the hot-rolled steel sheet and the electric resistance welded steel pipe or tube in No. 13 of the comparative examples, the volume fraction of crystal grains with a grain size of 40.0 µm or more exceeded the range of this disclosure due to a low total rolling reduction in finish rolling, and the Charpy impact value did not reach the desired value.

In the electric resistance welded steel pipe or tube in No. 14 of the comparative examples, the average grain size of the electric resistance weld portion exceeded the range of this disclosure due to a long air cooling time in the weld portion heat treatment step, and the Vickers hardness and flattening value did not reach the desired values.

In the electric resistance welded steel pipe or tube in No. 15 of the comparative examples, the volume fraction of ferrite and the total volume fraction of ferrite and bainite were below the ranges of this disclosure due to a high heating temperature in the weld portion heat treatment step, and the flattening value did not reach the desired value.

### REFERENCE SIGNS LIST

- 1: base metal portion
- 2: heat-affected zone
- 3: bond portion

## Claims

1. A hot-rolled steel sheet comprising a chemical composition containing, in mass%:
C: 0.020 % or more and 0.200 % or less;
Si: 0.02 % or more and 1.00 % or less;
Mn: 0.10 % or more and 2.50 % or less;
P: 0.050 % or less;
S: 0.0200 % or less;
Al: 0.005 % or more and 0.100 % or less;
N: 0.0100 % or less; and
Ti: 0.030 % or more and 0.200 % or less,
with the balance being Fe and inevitable impurities,
the hot-rolled steel sheet having a steel microstructure at the sheet thickness center with a volume fraction of bainite of 90 % or more and the balance containing one or more of ferrite, pearlite, martensite, and austenite, wherein
the steel microstructure at the sheet thickness center further has an average grain size of 10.0 µm or less, a volume fraction of crystal grains with a grain size of 40.0 µm or more of 40 % or less, and a number density of Ti-based inclusions with a long diameter length of 5.0 µm or more of 20 pieces/mm² or less.

2. The hot-rolled steel sheet according to claim 1, wherein the component composition further contains one or more of, in mass%:
Cu: 0.50 % or less;
Ni: 0.50 % or less;
Cr: 0.50 % or less;
Mo: 0.50 % or less;
Nb: 0.050 % or less;
V: 0.050 % or less;
Ca: 0.0050 % or less; and
B: 0.0050 % or less.

3. A method of producing the hot-rolled steel sheet according to claim 1 or 2, the method comprising:
a casting step of casting molten steel at an average cooling rate of 0.30 °C/s or more from the solidification point of the molten steel to 1200 °C to form a steel material;
a hot rolling step of heating the steel material to a heating temperature in a range of 1150 °C or more and 1300 °C or less and then hot rolling the heated steel material with a rough rolling finish temperature of 950 °C or more and 1180 °C or less, a rolling finish temperature of 850 °C or more and 1000 °C or less, and a total rolling reduction in finish rolling of 50 % or more and 80 % or less to form a hot-rolled sheet;
a cooling step of, after the hot rolling step, cooling the hot-rolled sheet at an average cooling rate in the mid-thickness of 10 °C/s or more and 60 °C/s or less and a cooling stop temperature in the mid-thickness of 400 °C or more and 580 °C or less; and
a coiling step of, after the cooling step, coiling the cooled hot-rolled sheet at a temperature of 400 °C or more and 580 °C or less.

4. An electric resistance welded steel pipe or tube comprising a base metal portion, a weld portion, and a heat-affected zone, wherein
the base metal portion has a chemical composition containing, in mass:
C: 0.020 % or more and 0.200 % or less;
Si: 0.02 % or more and 1.00 % or less;
Mn: 0.10 % or more and 2.50 % or less;
P: 0.050 % or less;
S: 0.0200 % or less;
Al: 0.005 % or more and 0.100 % or less;
N: 0.0100 % or less; and
Ti: 0.030 % or more and 0.200 % or less,
with the balance being Fe and inevitable impurities,
the base metal portion has a steel microstructure at the wall thickness center with a volume fraction of bainite of 90 % or more and the balance containing one or more of ferrite, pearlite, martensite, and austenite,
the steel microstructure at the wall thickness center of the base metal portion further has an average grain size of 10.0 µm or less, a volume fraction of crystal grains with a grain size of 40.0 µm or more of 40 % or less, and a number density of Ti-based inclusions with a long diameter length of 5.0 µm or more of 20 pieces/mm² or less,
the weld portion has a steel microstructure at the wall thickness center with a volume fraction of ferrite of 10 % or more, a total volume fraction of ferrite and bainite of 60 % or more and 98 % or less, and the balance containing one or more of pearlite, martensite, and austenite, and
the steel microstructure at the wall thickness center of the weld portion further has an average grain size of 15.0 µm or less.

5. The electric resistance welded steel pipe or tube according to claim 4, wherein the chemical composition of the base metal portion further contains one or more of, in mass%:
Cu: 0.50 % or less;
Ni: 0.50 % or less;
Cr: 0.50 % or less;
Mo: 0.50 % or less;
Nb: 0.050 % or less;
V: 0.050 % or less;
Ca: 0.0050 % or less; and
B: 0.0050 % or less.

6. A method of producing the electric resistance welded steel pipe or tube according to claim 4 or 5, the method comprising:
a pipe or tube forming step of forming a hot-rolled steel sheet into a cylindrical shape by cold roll forming, butt-joining circumferential ends of the cylindrical shape, and then subjecting the circumferential ends to electric resistance welding;
a weld portion heat treatment step of, after the pipe or tube forming step, heating the portion subjected to the electric resistance welding to a temperature of 850 °C or more and 1050 °C or less, air cooling the portion for 5 seconds or more and 50 seconds or less, and then water cooling the portion to a temperature of 200 °C or less; and
a sizing step of, after the weld portion heat treatment step, adjusting the pipe or tube outer diameter by sizing rollers.
